# EUROPEAN PATENT SPECIFICATION

(11) **EP 4 026 362 B1**
(45) Date of publication and mention of the grant of the patent: **04.03.2026**
(21) Application number: 19783134.0
(22) Date of filing: 01.10.2019
(51) Int. Cl.: H04W 4/00, H04W 24/02, H04W 24/10, H04W 4/029

(54) **DISTRIBUTION OF CONSOLIDATED ANALYTICS REPORTS IN A WIRELESS CORE NETWORK**
VERTEILUNG VON KONSOLIDIERTEN ANALYTISCHEN BERICHTEN IN EINEM DRAHTLOSEN KERNNETZ
DISTRIBUTION DE RAPPORTS ANALYTIQUES CONSOLIDÉS DANS UN RÉSEAU CENTRAL SANS FIL

(30) Priority: 02.09.2019 EP 19382743
(43) Date of publication of application: 13.07.2022
(73) Proprietor: Telefonaktiebolaget LM Ericsson (publ), 164 83 Stockholm (SE)
(72) Inventor: GARCIA MARTIN, Miguel Angel, 28224 Pozuelo de Alarcon (Madrid) (ES); MARTINEZ DE LA CRUZ, Pablo, 28045 Madrid (ES)
(74) Representative: Ericsson
(86) International application number: PCT/IB2019/058359
(87) International publication number: WO 2021/044204

(56) References cited:
- US-A1- 2015 230 113
- CATT: "Performance Improvement and Supervision of general mode for mIoT Terminals", vol. SA WG2, no. Kochi, India; 20190121 - 20190125, 15 January 2019 (2019-01-15), XP051595305, Retrieved from the Internet <URL:http://www.3gpp.org/ftp/Meetings%5F3GPP%5FSYNC/SA2/Docs/S2%2D1900536%2Ezip> [retrieved on 20190115]
- "3rd Generation Partnership Project; Technical Specification Group Services and System Aspects; Architecture enhancements for 5G System (5GS) to support network data analytics services (Release 16)", 3GPP STANDARD; TECHNICAL SPECIFICATION; 3GPP TS 23.288, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.0.0, 11 June 2019 (2019-06-11), pages 1 - 52, XP051753950
- CATT: "Performance Improvement and Supervision of general mode for mIoT Terminals", vol. SA WG2, no. Kochi, India; 20190121 - 20190125, 15 January 2019 (2019-01-15), XP051595305, Retrieved from the Internet <URL:http://www.3gpp.org/ftp/Meetings%5F3GPP%5FSYNC/SA2/Docs/S2%2D1900536%2Ezip> [retrieved on 20190115]
- "3rd Generation Partnership Project; Technical Specification Group Services and System Aspects; Architecture enhancements for 5G System (5GS) to support network data analytics services (Release 16)", 3GPP STANDARD; TECHNICAL SPECIFICATION; 3GPP TS 23.288, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.0.0, 11 June 2019 (2019-06-11), pages 1 - 52, XP051753950

## Description

### RELATED APPLICATIONS

This application claims priority to European Application No. EP19382743.3 filed 2 September 2019.

### TECHNICAL FIELD

The present disclosure relates generally to a network data analytics function (NWDAF) for a wireless core network and, more particularly, to the generation and distribution of consolidated analytics reports in the wireless core network.

### BACKGROUND

Release 15 (Rel-15) of the Third Generation Partnership Project (3GPP) standard for Fifth Generation (5G) networks introduces a new network function called the Network Data Analytics Function (NWDAF) and its basic functionality is specified in Release 16 (Rel-16), which is currently under development. Development of more advanced uses cases is planned for Rel-17.

According to Rel-16, the NWDAF is able to produce statistics and predictions related to the activity of a user equipment (UE) or groups of UEs. These statistics and predictions include, but are not limited to, UE mobility patterns (for example, determining if a UE is stationary or mobile, a prediction of the areas that the UE will visit, etc.) and UE communication patterns (time of communications, duration, maximum uplink and downlink bitrates, etc.). Core network nodes in the 5G core network (5GC), referred to herein as Consumer Network Functions, can query the NWDAF or subscribe to receive notifications from the NWDAF to obtain statistics or predictions for a UE or groups of UEs. Exemplary CNFs include the Access and Mobility Management Function (AMF) and the Session Management Function (SMF).

If a CNF is interested in receiving analytics for a group of UEs, such group is typically identified by means of an Internal Group Identifier (ID). In such case, the NWDAF obtains the list of UE identities (e.g., Subscription Permanent Identifiers (SUPIs)) for the members of the group from a Unified Data Management (UDM) function, generates analytics for each of these UE identities, and delivers the analytics reports to the CNF.

The current procedure as contemplated by the Rel-16 standard has a scalability problem. If the group of UEs for which analytics are generated is large, i.e., in the order of millions of subscribers, then the response generated by NWDAF contains an analytics report for each of these subscribers. As a consequence, NWDAF will generate a large amount of traffic that can easily overwhelm the memory and processing resources required by the CNF to handle the analytics reports.

Document "Performance Improvement and Supervision of general mode for mIoT Terminals", CATT, 3GPP draft S2-1900536 may be construed to disclose adding a solution for Key Issue 8: NWDAF-Assisted Performance Improvement and Supervision of general mode for mIoT Terminals into TS 23.288.

Document 3GPP TS 23.288 V16.0.0 may be construed to disclose Stage 2 architecture enhancements for 5G System (5GS) to support network data analytics services in 5G Core network.

Document US 2015/230113 A1 may be construed to disclose a method of facilitating coordinated multi-point communication (CoMP) in a wireless communications network including at least a first base station (BS) and a second BS, a plurality of user equipment (UEs) being associated with the second BS. The method includes generating, at the first BS, a status request message for requesting the second BS to report one or more types of status information, the status request message including at least one of an aggregation indicator and conditional reporting indicator, the aggregation indicator specifying whether the second BS is to report individual measurements or aggregated measurements to the first BS, the conditional reporting indicator indicating to the second BS to report measurements corresponding to the one or more types of resource status information to the first BS only when one or more conditions are met; and sending the status request message to the second BS.

### SUMMARY

The present disclosure relates generally to the creation and distribution of analytics reports in a wireless core network. A CNF requests analytic reports for a plurality of UEs from a NWDAF. Responsive to the request, the NWDAF compiles the requested data and generates analytics reports for the UEs identified in the request. During compilation of the analytics data, the NWDAF performs cluster analysis to identify groups of UEs 100, referred to herein as ephemeral groups, that share the same analytics report and generates a consolidated analytics report for each ephemeral group to reduce the number of analytics reports sent to the CNF.

The techniques herein described mitigate the effect of the vast amount of signaling in the network and requirements for CPU, memory, and storage in consumer network functions, when a consumer NF requests to NWDAF an analytics report for a group of users with a huge number of members. The NWDAF clusters the results of the analytics report, creating a report per cluster of UEs that share the report, instead of creating a report per UE. This mitigates the problem of huge signaling in the network (the more data can be shared by UEs, the less signaling). It also solves the problem of CPU, memory, and storage in consumer NFs, because they don't need to reserve a vast amount of memory and storage for storing each of the individual analytics report, or even CPU to parse each of the individual analytics reports.

According to the disclosure, there are provided a method, a network node and a computer-readable storage medium according to the independent claims. Further developments are set forth in the dependent claims.

A first aspect of the disclosure comprises a method implemented by the NWDAF of distributing analytics reports for a plurality of UEs. The NWDAF receives, from a requesting network node (e.g., CNF), a request for analytics reports for a plurality of UEs. The NWDAF compiles data for the analytics reports and performs cluster analysis based on the compiled data to identify a reporting group comprising two or more UEs among the plurality of UEs 100 for which data is to be consolidated. The NWDAF generates, based on the compiled data, a consolidated analytics report comprising consolidated data that is common to all members of the reporting group. The NWDAF sends, to the requesting node responsive to the request, the consolidated analytics report and a reporting group identifier identifying the reporting group associated with the consolidated analytics report.

A second aspect of the disclosure comprises a network node (e.g., NWDAF) configured to provide analytics reports to CNFs. The network node comprises interface circuitry for communicating with other network nodes in the communication network and processing circuitry. The processing circuitry is configured to perform the method of the first aspect.

A third aspect of the disclosure comprises computer programs containing instructions that, when executed by processing circuitry in a network node causes the network node to perform the method of the first aspect. The computer programs may be embodied in a carrier such as an electronic signal, optical signal, radio signal, or non-transitory computer readable storage medium.

### BRIEF DESCRIPTION OF THE DRAWINGS

Figure 1 illustrates a wireless core network according to an embodiment.
Figure 2 illustrates the core network nodes involved in the creation and distribution of analytics reports.
Figure 3 is a signaling diagram according to one embodiment illustrating a procedure for requesting and distributing analytics reports.
Figure 4 is a signaling diagram according to another embodiment illustrating a procedure for requesting and distributing analytics reports.
Figure 5 is a flow diagram illustrating an exemplary method performed by a producer network function (e.g., NWDAF).
Figure 6 is a flow diagram illustrating an exemplary method performed by a CNF (e.g., AMF, SMF, UDM).
Figure 7 illustrates the functional component of an exemplary analytics network function (e.g., NWDAF).
Figure 8 illustrates the functional component of an exemplary consumer network function (e.g., AMF, SMF, UDM).
Figure 9 illustrates a network node that is configurable as a consumer network function (e.g., AMF, SMF, UDM) or NWDAF

### DETAILED DESCRIPTION

Referring now to the drawings, an exemplary embodiment of the disclosure will be described in the context of a 5G wireless communication network. Those skilled in the art will appreciate that the methods and apparatus herein described are not limited to use in 5G networks but may also be used in wireless communication networks operating according to other standards.

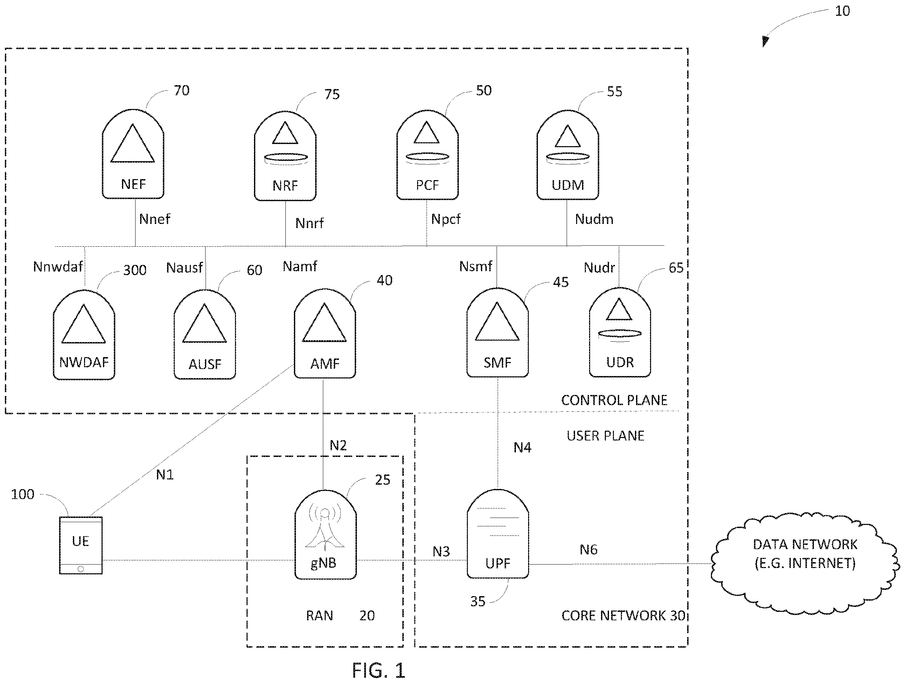

Figure 1 illustrates a wireless communication network 10 according to one exemplary embodiment. The wireless communication network 10 comprises a radio access network (RAN) 20 and a core network 30 employing a service-based architecture. The RAN 20 comprises one or more base stations 25 providing radio access to UEs 100 operating within the wireless communication network 10. The base stations 25 are also referred to as gNodeBs (gNBs). The core network 30 provides a connection between the RAN 20 and other packet data networks, such as the IMS or the Internet.

In one exemplary embodiment, the core network 30 comprises a plurality of network functions (NFs), such as a User Plane Function (UPF) 35, an Access And Mobility Management Function (AMF) 40, a Session Management Function (SMF) 45, a Policy Control Function (PCF) 50, a Unified Data Management (UDM) function 55, a Authentication Server function (AUSF) 60, a Unified Data Repository (UDR) 65, a Network Exposure Function (NEF) 70 and a Network Repository Function (NRF) 75. The core network 30 additionally includes a NWDAF 300 for generating and distributing analytics reports. These NFs comprise logical entities that reside in one or more core network nodes, which may be implemented by one or more processors, hardware, firmware, or a combination thereof. The functions may reside in a single core network node or may be distributed among two or more core network nodes.

In conventional wireless communication network, the various NFs (e.g., SMF 45, AMF 40, etc.) in the core network 30 communicate with one another over predefined interfaces. In the service-based architecture shown in Figure 1, instead of predefined interfaces between the control plane functions, the wireless communication network 10 uses a services model in which the NFs query the NRF 75 or other NF discovery node to discover and communicate with each other.

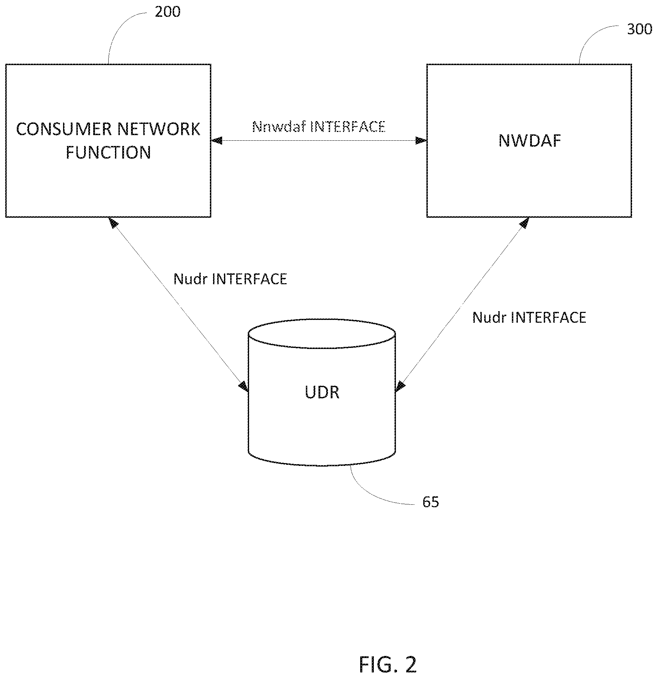

Figure 2 illustrates entities in the wireless core network 30 for creating and distributing analytics reports. Entities involved in the creation and distribution of analytics reports comprise one or more CNFs 200, the NWDAF 300 and the UDR 65. The CNFs 200 comprises core network nodes that according to 3GGP standards are service consumers. The CNFs 200 may, for example, comprise an AMF 40, a SMF 45 or UDM 55 that requests analytic reports from the NWDAF 300. The CNFs 200 use the Nnwdaf interface to send requests for analytics reports to the NWDAF 300. The request may specify a group of UEs 100 for which data is requested. For example, the CNF 200 may request a predicted future trajectory for a group of UEs 100 or an activity pattern for the group of UEs 100.

The NWDAF 300 according to 3GGP standards is a service producer because it generates reports used by other network nodes. The NWDAF 300 receives the requests for analytic data from the CNFs 20 over the Nnwdaf interface, compiles the requested data and generates analytics reports for the UEs identified in the request. During compilation of the analytics data, the NWDAF 300 performs cluster analysis to identify groups of UEs 100, referred to herein as ephemeral groups, that share the same analytics report and generates a consolidated analytics report for each ephemeral group to reduce the number of analytics reports sent to the CNF 200. The NWDAF 300 assigns an ephemeral group identity to each ephemeral group. The ephemeral group identity is generally valid for a limited period of time and the NWDAF 300 assigns a group validity time to each ephemeral group. This group validity time may, for example, coincide with the time when the next prediction will be generated. Therefore, if the NWDAF 300 generates a prediction at 13:00 hours every 24 hours, the group validity time is set to the next 13:00 hours.

In response to the request from the CNF 200, the NWDAF 300 delivers the consolidated analytics reports to the requesting CNF 200 in the form of triplets comprising an ephemeral group identity for an ephemeral group, a group validity time for the ephemeral group, and a consolidated analytics report applicable to the members of the ephemeral group. Additionally, the NWDAF 300 may provide group retrieval information that helps the CNF 200 retrieve the list of UEs 100 in the ephemeral groups.

On reception of the consolidated analytics reports from the NWDAF 300, the CNF 200 is generally not aware of which UEs 100 belong to each ephemeral group. To resolve this issue, the CNF 200 uses the group retrieval information to retrieve the list of UE IDs that identify the UEs 100 in each ephemeral group. The CNF 200 can apply the consolidated analytics report to all of the members of the ephemeral group. In one exemplary embodiment, the CNF 200 retrieves the UE IDs for each ephemeral group directly from the NWDAF 300. In other embodiments, the NWDAF 300 stores the UE IDs associated with each ephemeral group in the UDR 65 or other external database. In this case, the CNF 200 can retrieve the UE IDs for each ephemeral group from the UDR 65 or other external database.

In a large dataset, it is likely that most UEs will be classified in a group with multiple members. However, there may be scenarios where one UE is an outlier and cannot be grouped with other UEs. If the NWDAF 300 is configured to use groups, the NWDAF 300 can be configured to create a reporting group for the single member and generate a consolidated analytic report for the single-member ephemeral group, even though it has only a single member. This is useful because another UE may be added to the ephemeral group and allows configuration of the NWDAF to treat all groups the same regardless of the number of members in the group.

Although the clustering technique is intended for use with large datasets, there may also be occasions where the dataset is small. Thus, the NWDAF 300 can be configured to handle small datasets as well as large datasets. In the case of a very small dataset, the analytics data for different UEs may be so disperse, that there is no way that two UEs can be classified in the same group. Consider for example, a sample with 4 UEs where classification puts each UE in a different quadrant. If the NWDAF 300 is configured to use ephemeral groups, it will create a single-member group for each UE.

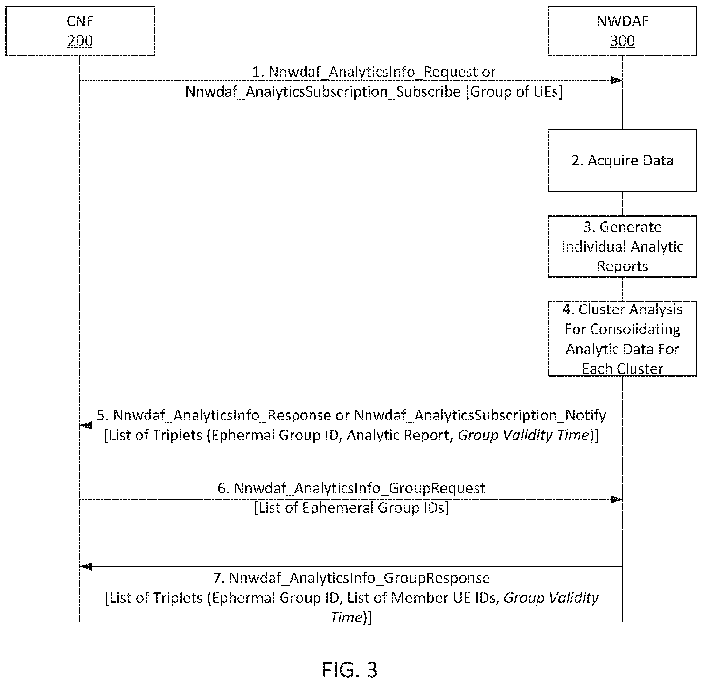

Figure 3 illustrates an exemplary procedure for providing analytics data to a CNF 200. The procedure starts when a CNF 200, such as an AMF 40, SM 45 F, or UDM 55, requests an analytics report for a group of UEs 100 by sending an analytics information request, denoted *Nnwdaf_AnalyticsInfo_Request,* to the NWDAF 300 (step 1). The analytics information request contains an indication of the type of the analytics report being requested, identified by an Analytic ID, and an indication of the group of UEs 100 for which the request is being made. The group of UEs 100 may be identified by a collective identifier (ID), such as an Internal Group ID or External Group ID. Alternatively, the CNF 200 can provide in the request a list of UE IDs (e.g., SUPIs) for which an analytics report is requested.

In some embodiments of the disclosure, the CNF 200 may send an analytics subscription request, denoted *Nnwdaf_AnalyticSubscription_Subscribe,* to the NWDAF 300 to subscribe to receive periodic or aperiodic analytics reports for a specified group of UEs 100. The analytics subscription request also contains an indication of the type of the analytics report being requested, identified by an Analytic ID, and an indication of the group of UEs 100 for which the request is being made.

In response to receipt of the analytics information/subscription request, the NWDAF 300 compiles the needed information to generate the requested analytics reports (step 2). The data compilation may include, for example, retrieving the list of UE IDs for the UEs 100 that are members of the group associated with the Internal Group ID or External Group ID provided in the request. The list of UE IDs can, for example, be retrieved from a UDM 55 or UDR 65. The data compilation may further comprise sending requests to and receiving response from other network functions to acquire source data for each UE 100 needed to generate the analytics report for the UE 100.

The NWDAF 300 generates an individual analytics report for each UE 100 identified by the analytics information/subscription request (step 3). In many cases, the list of UEs 100 for which analytics reports are requested will be very large and it is not practical to send an individual report for each UE 100. In this case, the NWDAF 300 performs a cluster analysis process for determining the similarities and equalities in the analytics report of each of the individual UEs 100. The result of this process is the creation of one or more ephemeral groups, also referred to herein as reporting groups, that share the same analytics report. Each ephemeral group is associated to a consolidated analytics report that is common to all the members of the ephemeral group. A group validity time is also created, setting the validity time to a time in the future at which the analytics report is deemed to be outdated. Typically, the group validity time may be the time at which NWDAF 300 is expected have a new analytics report created based on more recent source data. Once the consolidated analytics reports are generated, the NWDAF 300 sends an analytics information response, denoted *Nnwdaf_AnalyticsInfo_Response,* to the CNF 200 containing the consolidated analytics reports generated by the NWDAF 300 (step 5). In one embodiment, the analytics information response includes a list of triplets, each triplet comprising an ephemeral group ID, the consolidated analytics report that applies to all members of the ephemeral group, and an optional group validity time.

After receipt of the analytics information response from the NWDAF 300, the CNF 200 the NWDAF 300 to obtain the list of UE IDs that are members of each ephemeral group (step 6). The query, denoted *Nnwdaf_AnalyticsInfo_Group_Request,* indicates the ephemeral group IDs for which UE IDs are requested. The query is also referred to herein as a group information request. In response to the group information request from the CNF 200, the NWDAF 300 sends a query response, denoted *Nnwdaf_AnalyticsInfo_Group_Response,* including a list of UE IDs associated with each ephemeral group ID. The query response is also referred to herein as a group information response. Using this information, the CNF 200 can relate the consolidated analytics report to each of the UEs 100 and take whatever actions are required. Upon expiration of the group validity time, both the CNF 200 and the NWDAF 300 delete the ephemeral groups that have expired and their respective membership lists.

In some embodiments, the analytic information response returned in step 5 comprises a listing of ephemeral group IDs and associated analytics report without a group validity time. In this case, the group validity time can optionally be provided in the *Nnwdaf_AnalyticsInfo_Group_Response* when the CNF 200 queries the NWDAF 300 for group membership information. More specifically, for each ephemeral group ID contained in the group information request sent in step 6, the NWDAF 300 provides a triplet comprising the ephemeral group ID, the list of UE IDs associated with the ephemeral group ID, and the group validity time.

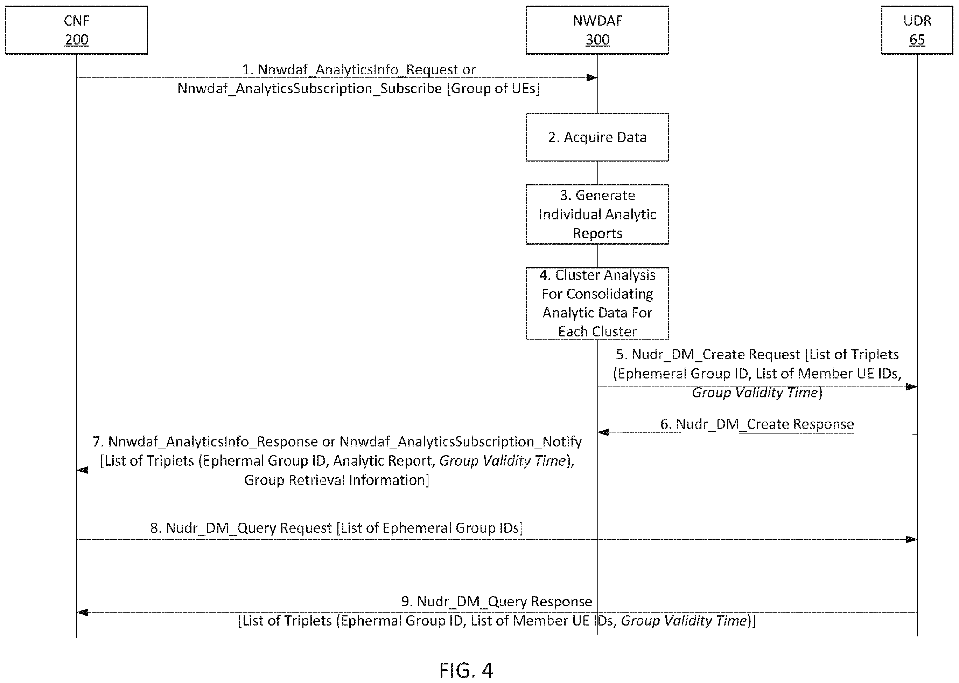

Figure 4 illustrates another exemplary procedure for providing analytics data to a CNF 200. Steps 1-4 are the same as the procedure shown in Figure 3. The procedure starts when a CNF 200, such as an AMF, SMF, or UDM, requests an analytics report for a group of UEs 100 by sending an analytics information request, denoted *Nnwdaf_AnalyticsInfo_Request,* to the NWDAF 300 (step 1). The analytics information request contains an indication of the type of the analytics report being requested, identified by an Analytic ID, and an indication of the group of UEs 100 for which the request is being made. The group of UEs 100 may be identified by a collective identifier, such as an Internal Group ID or External Group ID. Alternatively, the CNF 200 can provide in the request a list of UE IDs (e.g., SUPIs) for which an analytics report is requested. In some embodiments of the disclosure, the CNF 200 may send an analytics subscription request, denoted *Nnwdaf_AnalyticSubscription_Subscribe,* to the NWDAF 300 to subscribe to receive periodic or aperiodic analytics reports for a specified group of UEs 100. The analytics subscription request also contains an indication of the type of the analytics report being requested, identified by an Analytic ID, and an indication of the group of UEs 100 for which the request is being made.

In response to receipt of the analytics information/subscription request, the NWDAF 300 compiles the needed information to generate the requested analytics reports (step 2). The data compilation may include, for example, retrieving the list of UE IDs for the UEs 100 that are members of the group identified by the Internal Group ID or External Group ID. The list of UE IDs can, for example, be retrieved from a UDM 55 or UDR 65. The data compilation may further comprise sending requests to and receiving response from other network functions to acquire source data for each UE 100 need to generate the analytics report for the UE 100.

The NWDAF 300 generates an individual analytics report for each UE 100 identified by the analytics information/subscription request (step 3). As previously noted, it is not practical to send an individual report for each UE 100 in many cases. Therefore, the NWDAF 300 performs a cluster analysis process to determine the similarities and equalities in the analytics report of each of the individual UEs 100. The result of this process is the creation of one or more ephemeral groups (i.e., reporting groups) that share the same analytics report. Each ephemeral group is associated to a consolidated analytics report that is common to all the members of the ephemeral group. A group validity time is also created, setting the validity time to a time in the future at which the analytics report is deemed to be outdated. Typically, the group validity time may be the time at which NWDAF 300 is expected have a new analytics report created based on more recent source data.

After finishing the cluster analysis and identifying the ephemeral groups, the NWDAF 300 sends a create request to a UDR 65 to request the UDR 65 to create a record associating the group ID for each ephemeral group with a corresponding list of UE IDs (step 5). The create request, denoted *Nudr_DM_Create_Request,* contains a triplet for each ephemeral group comprising the group ID, the list of UE IDs indicating members of the ephemeral group and the group validity time. Responsive to the create request, the UDR 65 stores the information about each ephemeral group in a database and returns a create response, denoted *Nudr_ DM_Create_Response,* to acknowledge receipt of the create request and confirm creation of the records for the ephemeral groups (step 6).

Once the consolidated analytics reports are generated, the NWDAF 300 sends an analytics information response, denoted *Nnwdaf_AnalyticsInfo_Response,* to the CNF 200 containing the consolidated analytics reports generated by the NWDAF 300 (step 7). This step can be performed before or in parallel with steps 5 and 6. In one embodiment, the analytics information response includes a list of triplets, each one containing an ephemeral group ID, the consolidated analytics report that applies to all members of the group, and an optional group validity time.

After receipt of the analytics information response from the NWDAF 300, the CNF 200 queries the UDR 65 to obtain the list of UE IDs for the UEs 100 that are members of each ephemeral group (step 8). In one embodiment, the CNF 200 sends a *Nudr_ DM_Query_Request* to the UDR 65 containing a list of ephemeral group IDs for which UE IDs are requested. The query is also referred to herein as a group information request. In response to the group information request from the CNF 200, the UDR 65 sends a group information response, denoted *Nudr_ Query_Response,* including a list of UE IDs associated with each ephemeral group ID (step 9). The CNF 200 can relate the consolidated analytics report to each of the affected UEs 100 and take whatever actions are required. Upon expiration of the group validity time, both the CNF 200 and the UD 40 delete all the ephemeral groups that have expired and their respective membership list.

In some embodiments, the analytic information response returned in step 7 comprises a listing of ephemeral group IDs and associated analytics report without a group validity time. In this case, the group validity time can optionally be provided by the UDR 65 in the query response. More specifically, for each group ID contained in the group information request sent in step 8, the UDR 65 provides a triplet comprising the ephemeral group ID, the list of UE IDs associated with the ephemeral group ID, and the group validity time.

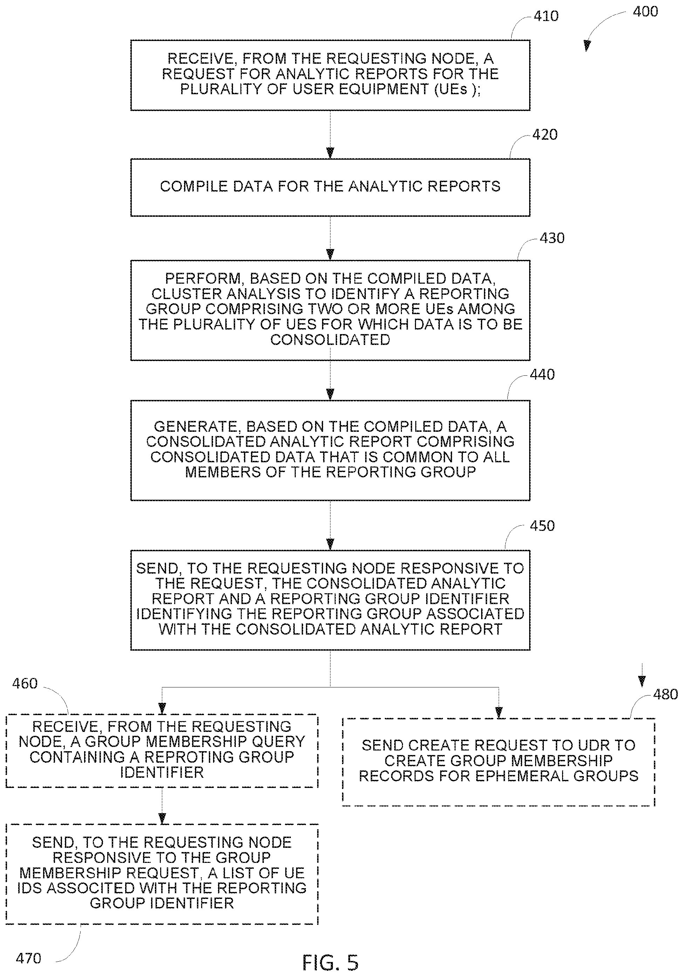

Figure 5 illustrates an exemplary method 400 implemented by the NWDAF 300 of distributing analytics reports for a plurality of UEs 100. Actions shown in dashed lines are optional. The NWDAF 300 receives, from a requesting network node (e.g., CNF 200), a request for analytics reports for a plurality of UEs 100 (block 410). The NWDAF 300 compiles data for the analytics reports (block 420) and performs cluster analysis based on the compiled data to identify a reporting group comprising two or more UEs 100 among the plurality of UEs 100 for which data is to be consolidated (block 430). The NWDAF 300 generates, based on the compiled data, a consolidated analytics report comprising consolidated data that is common to all members of the reporting group (block 440). After the consolidated reports are generated, the NWDAF 300 sends, to the requesting node responsive to the request, the consolidated analytics report and a reporting group identifier identifying the reporting group associated with the consolidated analytics report (block 450).

In some embodiments of the method 100, the NWDAF 300 stores group membership information for the reporting groups. In this case, the NWDAF 300 may further receive a group information request from the CNF 200 containing a group identifier associated with an ephemeral group (block 460). Responsive to the group membership request, the NWDAF sends the CNF 200 a list of UE IDs associated with the group ID for the reporting group (block 470).

In other embodiment of the disclosure, the group membership information is stored by the UDR 55 or other external database. In this case, the NWDAF 300 sends a send create request to the UDR 55 to create group membership record for each ephemeral group (block 480). The CNF 200 can then query the UDR 55 to obtain group membership information.

In some embodiment of the method 400, the analytics information request is a subscription request from the requesting node requesting periodic or aperiodic analytics reports.

In some embodiment of the method 400, the analytics information request comprises a group identifier identifying a group of UEs 100 for which analytics reports are requested. The group identifier comprises one of an Internal Group ID or an External Group ID.

Some embodiment of the method 400 further comprise requesting, from a Unified Data Management (UDM) function or a UDR 65, the identities of the UEs 100 in the group of UEs 100 associated with the group identifier. The NWDAF 300 receives, responsive to the request, a list of UEs 100 in the group of UEs 100 associated with the group identifier from the UDM or UDR 65.

In some embodiment of the method 400, the analytics information request comprises a list of individual UE 100 identifier for which analytics reports are requested. The individual UE 100 identifiers in one example comprise SUPIs.

In some embodiment of the method 400, compiling data comprises requesting the source data from one or more other network functions.

In some embodiment of the method 400, the reporting group is an ephemeral group that is valid for a limited time. The NWDAF 300 determines the group validity time for the reporting group and sends the group validity time to the requesting node along with the consolidated analytics report and reporting group identifier.

In some embodiment of the method 400, sending the analytics report and a reporting group identifier to the requesting node comprises sending the consolidated analytics report and group identifier together in a single message. The single message may include the group validity time.

Some embodiment of the method 400 further comprise generating and sending consolidated analytics reports for two or more different reporting groups, each reporting group comprising different ones of the plurality of UEs 100.

Some embodiments of the method 400 further comprise identifying, based on the cluster analysis, a second reporting group comprising a single UE, generating, based on the compiled data, a second consolidated analytics report for the second reporting group, and sending, to the requesting node responsive to the request, the second consolidated analytics report and a reporting group identifier identifying the second reporting group associated with the second consolidated analytics report.

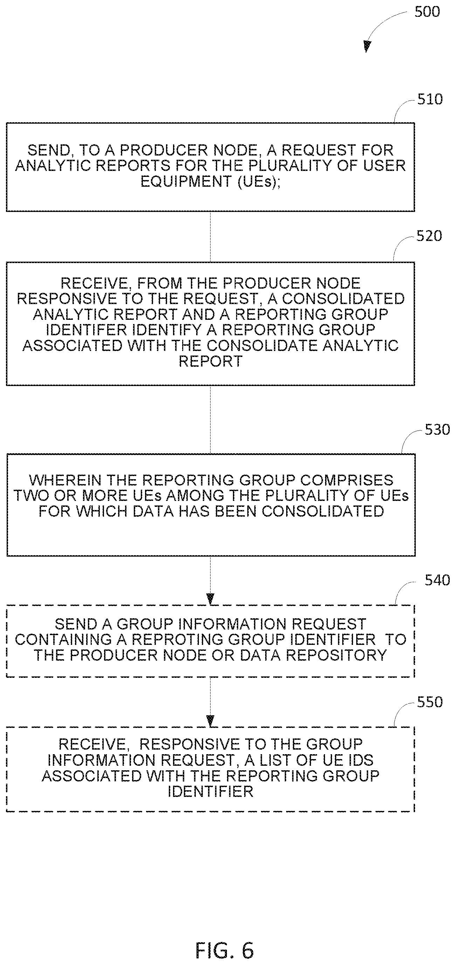

Figure 6 illustrates an exemplary method 500 implemented by a CNF 200 in a wireless core network of acquiring analytics reports for a plurality of UEs 100. Actions shown in dashed lines are optional. The CNF 200 sends a request for analytics reports for the plurality of UEs 100 to a NWDAF 300 or other producer node (block 510). The CNF 200 receives, from the NWDAF 300 responsive to the request, a consolidated analytics report and a reporting group identifier identifying a reporting group associated with the consolidate analytics report (block 520). The reporting group comprises two or more UEs 100 among the plurality of UEs 100 for which data has been consolidated.

In some embodiments of method 500, the CNF sends, to the NWDAF 300 or UDER 65, a group information request containing the reporting group identifier to obtain information about the members of the reporting group (block 540). The CNF 200 receives, responsive to the group information request, a list of UE 100 identifiers for UEs 100 in the reporting group (block 550).

Some embodiments of the method 500 further comprise sending to a UDM or UDR a second request containing the reporting group identifier. The CNF 200 receives, responsive to the second request, a list of UE 100 identifiers for UEs 100 in the reporting group from the UDM or UDR 65.

In some embodiments of the method 500, the analytics information request is a subscription request from the requesting node requesting periodic or aperiodic analytics reports.

In some embodiments of the method 500, the analytics information request comprises a group identifier identifying a group of UEs 100 for which analytics reports are requested. The group identifier may comprise, for example, one of an Internal Group ID or an External Group ID.

In some embodiments of the method 500, the analytics information request comprises a list of individual UE IDs for which analytics reports are requested. The individual UE IDs comprise, for example SUPIs.

In some embodiments of the method 500, the reporting group is an ephemeral group that is valid for a limited time and the CNF receives, from the NWDAF 300, the group validity time.

In some embodiments of the method 500, receiving the consolidated analytics report and a reporting group identifier comprises receiving the consolidated analytics report and group identifier together in a single message. The single message may further include the group validity time in some embodiments.

Some embodiments of the method 500 further comprise receiving consolidated analytics reports for multiple reporting groups, each reporting group comprising different ones of the plurality of UEs 100.

Some embodiments of the method further comprise receiving, from the producer node responsive to the request, a second consolidated analytics report and a second reporting group identifier identifying a second reporting group associated with the second consolidate analytics report, wherein the second reporting group comprises a single UE.

The methods herein described can be implemented by an apparatus comprising any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

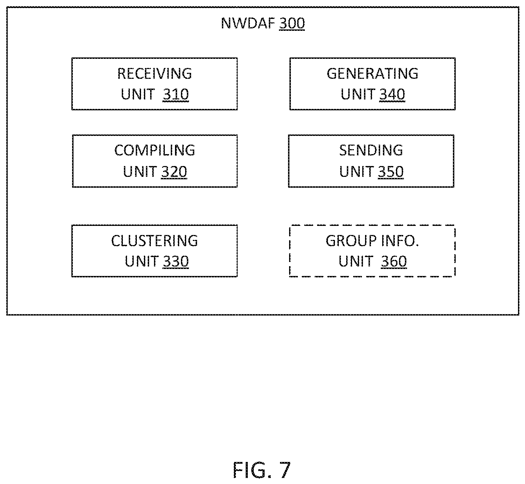

Figure 7 illustrates the main functional components of network node configured to function as a NWDAF 300. The network node comprises a receiving unit 310, a compiling unit 320, a clustering unit 330, a generating unit 340, a sending unit 350, and an optional group information unit 360. The various units 310 - 360 can be implemented by hardware and/or by software code that is executed by one or more processors or processing circuits. The receiving unit 310 is configured to receive, from a CNF 200, a request for analytics reports for the plurality of UEs 100. The compiling unit 320 is configured to send measurement reports according to compile data for the analytics reports. The clustering unit 330 is configured to perform cluster analysis based on the compiled data, to identify a reporting group comprising two or more UEs 100 among the plurality of UEs 100 for which data is to be consolidated. The generating unit 340 is configured to generate, based on the compiled data, a consolidated analytics report comprising consolidated data that is common to all members of the reporting group. The sending unit 350 is configured to send, to the CNF 200 responsive to the request, the consolidated analytics report and a reporting group identifier identifying the reporting group associated with the consolidated analytics report. The group information unit 360, when resent is configured to store group membership data for the reporting groups in an internal or external data base. In cases, where the group membership data is stored internally, the group information unit 360 is configured to receive a group membership request containing the reporting group identifier from the CNF 200 and to send, responsive to the group membership request, a list of UE 100 identifiers for UEs 100 in the reporting group. In cases where the group membership data is stored externally, the group information unit 360 is configured to send a create request to a UDR 65 or other external database to create a record for each ephemeral group. The create request includes, for each ephemeral group, a reporting group identifier and a list of UE 100 identifiers for UEs 100 in the reporting group indicated by the reporting group identifier. The create request may also optional include the group validity time for each ephemeral group.

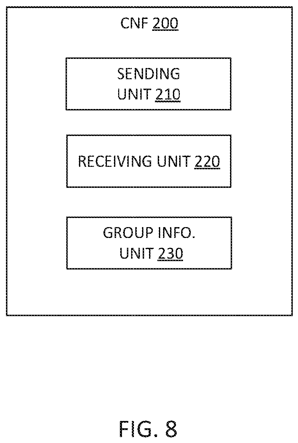

Figure 8 illustrates the main functional components of network node configured to function as a CNF 200. The CNF 200 comprises a sending unit 210, a receiving unit 220, and an optional group information 230. The various units 210 - 230 can be implemented by hardware and/or by software code that is executed by one or more processors or processing circuits. The first sending unit 310 is configured to send, to a NWDAF 300, a request for analytics reports for the plurality of UEs 100. The first receiving unit 220 is configured to receive, from the NWDAF 300 responsive to the request, a consolidated analytics report and a reporting group identifier identifying a reporting group associated with the consolidate analytics report. The group information unit 230, when present, is configured to send to the NWDAF 300 or UDR 65, a group information request to obtain a list of UEs in one or more ephemeral groups. The group information request contains the reporting group identifier for each ephemeral group to which the request pertains. The group information unit 230 additionally receives, from the NWDAF 300 or UDR 65 responsive to the group information request, a list of UE 100 identifiers for UEs 100 in the reporting group.

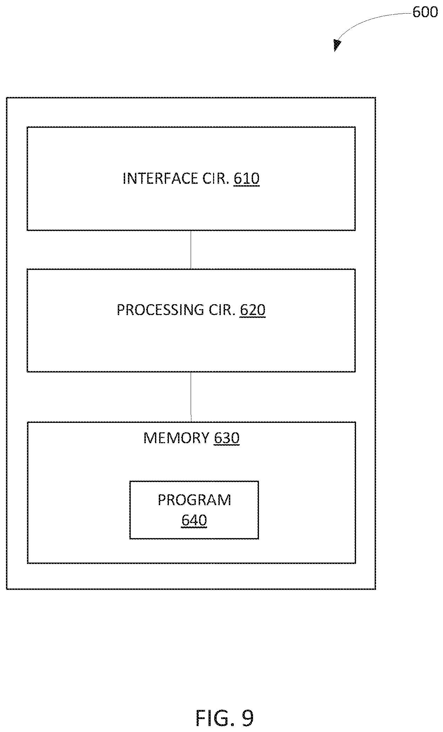

Figure 9 illustrates a core network node 600 according to one embodiment that may be configured to function as a CNF 200 or NWDAF 300 as herein described. The core network node 600 comprises an interface circuit 620, a processing circuit 620, and memory 630. The interface circuit 620 couples the core network node 600 to a communication network and enables communication with other core network nodes in a wireless core network. The processing circuit 620 controls the overall operation of the core network node 600 and executes computer programs 640 stored in memory 630 to perform one or more of the methods as herein described. The processing circuit 620 may comprise one or more microprocessors, hardware, firmware, or a combination thereof. Memory 630 comprises both volatile and non-volatile memory for storing computer program code and data needed by the processing circuit 620 for operation. Memory 630 may comprise any tangible, non-transitory computer-readable storage medium for storing data including electronic, magnetic, optical, electromagnetic, or semiconductor data storage. Memory 630 stores a computer program 640 comprising executable instructions that configure the processing circuit 620 to implement the method 300 (for a NWDAF 300) or method 400 (for a CNF 200) according to Figures 5 and 6 as described herein. A computer program 640 in this regard may comprise one or more code modules corresponding to the means or units described above. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program core network node 600 for configuring the processing circuit 620 as herein described may be stored in a removable memory, such as a portable compact disc, portable digital video disc, or other removable media. The computer program 660 may also be embodied in a carrier such as an electronic signal, optical signal, radio signal, or computer readable storage medium.

Those skilled in the art will also appreciate that embodiments herein further include corresponding computer programs. A computer program comprises instructions that, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

The techniques herein described mitigate the effect of the vast amount of signaling in the network and requirements for CPU, memory, and storage in consumer network functions, when a consumer NF requests to NWDAF 300 an analytics report for a group of users with a huge number of members. The NWDAF 300 clusters the results of the analytics report, creating a report per cluster of UEs 100 that share the report, instead of creating a report per UE 100. This mitigates the problem of huge signaling in the network (the more data can be shared by UEs 100, the less signaling). It also solves the problem of CPU, memory, and storage in consumer NFs, because they don't need to reserve a vast amount of memory and storage for storing each of the individual analytics report, or even CPU to parse each of the individual analytics reports.

## Claims

1. A method (400) implemented by a core network node in a wireless core network of distributing analytics reports for a plurality of user equipment (UEs (100)), the method comprising:
receiving (410), from a requesting node (40, 45, 200, 600), a request for analytics reports for the plurality of UEs (100);
compiling (420) data for the analytics reports;
performing (430), based on the compiled data, cluster analysis to identify a reporting group comprising two or more UEs (100) among the plurality of UEs (100) for which data is to be consolidated;
generating (440), based on the compiled data, a consolidated analytics report comprising consolidated data that is common to all members of the reporting group;
sending (450), to the requesting node (40, 45, 200, 600) responsive to the request, the consolidated analytics report and a reporting group identifier identifying the reporting group associated with the consolidated analytics report.

2. The method (400) of clam 1 wherein the reporting group is an ephemeral group that is valid for a limited time, wherein the method (400) further comprises determining a group validity time for the reporting group and sending the group validity time to the requesting node (40, 45, 200, 600) along with the consolidated analytics report and reporting group identifier.

3. The method (400) of claim 2 wherein sending the analytics report and a reporting group identifier to the requesting node (40, 45, 200, 600) comprises sending the consolidated analytics report and group identifier together in a single message, wherein the single message further includes the group validity time.

4. The method (400) of any one of claims 1 to 3 wherein:
- the request is a subscription request from the requesting node (40, 45, 200, 600) requesting periodic or aperiodic analytics reports; and/or
- the request comprises a group identifier identifying a group of UEs (100) for which analytics reports are requested; and/or
- compiling data comprises requesting source data from one or more other network functions; and/or
- the method (400) further comprises generating and sending consolidated analytics reports for two or more different reporting groups, each reporting group comprising different ones of the plurality of UEs (100); and/or
- the method (400) further comprises identifying, based on the cluster analysis, a second reporting group comprising a single UE (100); generating, based on the compiled data, a second consolidated analytics report for the second reporting group; sending, to the requesting node (40, 45, 200, 600) responsive to the request, the second consolidated analytics report and a reporting group identifier identifying the second reporting group associated with the second consolidated analytics report.

5. The method (400) of claim 1 wherein the request comprises a list of individual UE (100) identifier for which analytics reports are requested.

6. The method (400) of any one of claims 1 to 5, wherein:
- the method further comprises receiving (460) from the requesting node (40, 45, 200, 600) a group information request containing the reporting group identifier; and sending (470), to the requesting node (40, 45, 200, 600) responsive to the group information request, a list of UE (100) identifiers for UEs (100) in the reporting group; or
- the method (400) further comprises sending (480), to a data repository, a request to create a new record associating the reporting group identifier with a list of UE (100) identifiers for UEs (100) in the reporting group.

7. A network node (600) implemented in a communication network configured to distribute analytics reports for a plurality of UEs (100) to a requesting node (40, 45, 200, 600) in the communication network, the network node comprising:
interface circuitry (610) for communicating with other network nodes in the communication network;
processing circuitry (620) configured to perform all steps of a method according to any one of claims 1 to 6.

8. A non-transitory computer-readable storage medium (630) containing a computer program comprising executable instructions that, when executed by a processing circuit in a network node in a wireless communication network causes the network node to perform any one of the methods of claims 1 to 6.

## Patentansprüche

1. Verfahren (400), das von einem Kernnetzwerkknoten in einem drahtlosen Kernnetzwerk implementiert wird, zur Verteilung von Analyseberichten für eine Mehrzahl von Benutzereinrichtungen, UEs, (100), wobei das Verfahren Folgendes umfasst:
Empfangen (410) einer Anforderung für Analyseberichte für die Mehrzahl von UEs (100) von einem anfordernden Knoten (40, 45, 200, 600);
Kompilieren (420) von Daten für die Analyseberichte;
Durchführen (430) einer Clusteranalyse basierend auf den kompilierten Daten, um eine Berichterstattungsgruppe zu identifizieren, die zwei oder mehr UEs (100) aus der Mehrzahl von UEs (100) umfasst, für die die Daten konsolidiert werden sollen;
Erzeugen (440) eines konsolidierten Analyseberichts, der konsolidierte Daten umfasst, die allen Mitgliedern der Berichterstattungsgruppe gemeinsam sind, basierend auf den kompilierten Daten;
Senden (450) des konsolidierten Analyseberichts und einer Berichterstattungsgruppenkennung, die die mit dem konsolidierten Analysebericht assoziierte Berichterstattungsgruppe identifiziert, in Reaktion auf die Anforderung an den anfordernden Knoten (40, 45, 200, 600).

2. Verfahren (400) nach Anspruch 1, wobei die Berichterstattungsgruppe eine ephemere Gruppe ist, die für eine begrenzte Zeit gültig, wobei das Verfahren (400) ferner Bestimmen einer Gruppengültigkeitsdauer für die Berichterstattungsgruppe und Senden der Gruppengültigkeitsdauer zusammen mit dem konsolidierten Analysebericht und der Berichterstattungsgruppenkennung an den anfordernden Knoten (40, 45, 200, 600) umfasst.

3. Verfahren (400) nach Anspruch 2, wobei das Senden des Analyseberichts und einer Berichterstattungskennung an den anfordernden Knoten (40, 45, 200, 600) Senden des konsolidierten Analyseberichts und der Gruppenkennung zusammen in einer einzigen Nachricht umfasst, wobei die einzige Nachricht ferner die Gruppengültigkeitsdauer umfasst.

4. Verfahren (400) nach einem der Ansprüche 1 bis 3, wobei:
- die Anforderung eine Abonnementanforderung von dem anfordernden Netzwerkknoten (40, 45, 200, 600) ist, die periodische oder aperiodische Analyseberichte anfordert; und/oder
- die Anforderung eine Gruppenkennung umfasst, die eine Gruppe von UEs (100) identifiziert, für die Analyseberichte angefordert werden; und/oder
- das Kompilieren von Daten Anfordern von Quelldaten von einer oder mehreren anderen Netzwerkfunktionen umfasst; und/oder
- das Verfahren (400) ferner Erzeugen und Senden von konsolidierten Analyseberichten für zwei oder mehr verschiedene Berichterstattungsgruppen umfasst, wobei jede Berichterstattungsgruppe andere der Mehrzahl von UEs (100) umfasst; and/oder
- das Verfahren (400) ferner Identifizieren einer zweiten Berichterstattungsgruppe, die eine einzige UE (100) umfasst, basierend auf der Clusteranalyse; Erzeugen eines zweiten konsolidierten Analyseberichts für die zweite Berichterstattungsgruppe basierend auf den kompilierten Daten und Senden des zweiten konsolidierten Analyseberichts und einer Berichterstattungsgruppenkennung, die die mit dem zweiten konsolidierten Analysebericht assoziierte zweite Berichterstattungsgruppe identifiziert, in Reaktion auf die Anforderung an den anfordernden Knoten (40, 45, 200, 600) umfasst.

5. Verfahren (400) nach Anspruch 1, wobei die Anforderung eine Liste von Kennungen einzelner UEs (100) umfasst, für die Analyseberichte angefordert werden.

6. Verfahren (400) nach einem der Ansprüche 1 bis 5, wobei:
- das Verfahren ferner Empfangen (460) einer Gruppeninformationsanforderung, die die Berichterstattungsgruppenkennung enthält, von dem anfordernden Netzwerkknoten (40, 45, 200, 600) und Senden (470) einer Liste von Kennungen von UEs (100) für UEs (100) in der Berichterstattungsgruppe in Reaktion auf die Gruppeninformationsanforderung an den anfordernden Knoten (40, 45, 200, 600) umfasst; oder
- das Verfahren (400) ferner Senden (480) einer Anforderung zum Erstellen eines neuen Berichts, der die Berichterstattungsgruppenkennung mit einer Liste von Kennungen von UEs (100) für UEs (100) in der Berichterstattungsgruppe assoziiert, an ein Datenrepository.

7. Netzwerkknoten (600), der in einem Kommunikationsnetzwerk implementiert und zum Verteilen von Analyseberichten für eine Mehrzahl von UEs (100) an einen anfordernden Knoten (40, 45, 200, 600) in dem Kommunikationsnetzwerk konfiguriert ist, wobei der Netzwerkknoten Folgendes umfasst:
Schnittstellenschaltungsanordnung (610) zum Kommunizieren mit anderen Netzwerkknoten in dem Kommunikationsnetzwerk;
Verarbeitungsschaltungsanordnung (620), die zum Ausführen aller Schritte eines Verfahrens nach einem der Ansprüche 1 bis 6 konfiguriert ist.

8. Nicht-transitorisches computerlesbares Speichermedium (630), das ein Computerprogramm enthält, das ausführbare Anweisungen umfasst, die bei Ausführung durch eine Verarbeitungsschaltung in einem Netzwerkknoten in einem drahtlosen Kommunikationsnetzwerk den Netzwerkknoten zum Durchführen eines der Verfahren nach Anspruch 1 bis 6 veranlassen.

## Revendications

1. Procédé (400) mis en œuvre par un nœud de réseau central dans un réseau central sans fil de distribution de rapports analytiques pour une pluralité d'équipements utilisateurs (UE (100)), le procédé comprenant :
la réception (410), depuis un nœud demandeur (40, 45, 200, 600), d'une demande de rapports analytiques pour la pluralité d'UE (100) ;
la compilation (420) de données pour les rapports analytiques ;
la réalisation (430), sur la base des données compilées, d'une analyse typologique pour identifier un groupe de rapport comprenant deux UE (100) ou plus parmi la pluralité d'UE (100) pour lesquels des données doivent être consolidées ;
la génération (440), sur la base des données compilées, d'un rapport analytique consolidé comprenant des données consolidées qui sont communes à tous les membres du groupe de rapport ;
l'envoi (450), au nœud demandeur (40, 45, 200, 600) en réponse à la demande, du rapport analytique consolidé et d'un identifiant de groupe de rapport qui identifie le groupe de rapport associé au rapport analytique consolidé.

2. Procédé (400) selon la revendication 1, dans lequel le groupe de rapport est un groupe éphémère qui est valide pendant une durée limitée, dans lequel le procédé (400) comprend en outre la détermination d'un temps de validité de groupe pour le groupe de rapport et l'envoi du temps de validité de groupe au nœud demandeur (40, 45, 200, 600) avec le rapport analytique consolidé et l'identifiant de groupe de rapport.

3. Procédé (400) selon la revendication 2, dans lequel l'envoi du rapport analytique et d'un identifiant de groupe de rapport au nœud demandeur (40, 45, 200, 600) comprend l'envoi du rapport analytique consolidé et de l'identifiant de groupe ensemble dans un message unique, dans lequel le message unique inclut en outre le temps de validité de groupe.

4. Procédé (400) selon l'une quelconque des revendications 1 à 3, dans lequel :
- la demande est une demande d'abonnement depuis le nœud demandeur (40, 45, 200, 600) demandant des rapports analytiques périodiques ou apériodiques ; et/ou
- la demande comprend un identifiant de groupe qui identifie un groupe d'UE (100) pour lesquels des rapports analytiques sont demandés ; et/ou
- la compilation de données comprend la demande de données de source d'une ou plusieurs autres fonctions de réseau ; et/ou
- le procédé (400) comprend en outre la génération et l'envoi de rapports analytiques consolidés pour deux groupes de rapport différents ou plus, chaque groupe de rapports comprenant des UE différents parmi la pluralité d'UE (100) ; et/ou
- le procédé (400) comprend en outre l'identification, sur la base de l'analyse typologique, d'un deuxième groupe de rapport comprenant un UE (100) unique ; la génération, sur la base des données compilées, d'un deuxième rapport analytique consolidé pour le deuxième groupe de rapport ; l'envoi, au nœud demandeur (40, 45, 200, 600) en réponse à la demande, du deuxième rapport analytique consolidé et d'un identifiant de groupe de rapport qui identifie le deuxième groupe de rapport associé au deuxième rapport analytique consolidé.

5. Procédé (400) selon la revendication 1, dans lequel la demande comprend une liste d'identifiants d'UE (100) individuels pour lesquels des rapports analytiques sont demandés.

6. Procédé (400) selon l'une quelconque des revendications 1 à 5, dans lequel :
- le procédé comprend en outre la réception (460), depuis le nœud demandeur (40, 45, 200, 600), d'une demande d'informations de groupe contenant l'identifiant de groupe de rapport ; et l'envoi (470), au nœud demandeur (40, 45, 200, 600) en réponse à la demande d'informations le groupe, d'une liste d'identifiants d'UE (100) pour des UE (100) dans le groupe de rapport ; ou
- le procédé (400) comprend en outre l'envoi (480), à un référentiel de données, d'une demande pour créer un nouvel enregistrement associant l'identifiant de groupe de rapport à une liste d'identifiants d'UE (100) pour des UE (100) dans le groupe de rapport.

7. Nœud de réseau (600) mis en œuvre dans un réseau de communication configuré pour distribuer des rapports analytiques pour une pluralité d'UE (100) à un nœud demandeur (40, 45, 200, 600) dans le réseau de communication, le nœud de réseau comprenant :
une circuiterie d'interface (610) pour communiquer avec d'autres nœuds de réseau dans le réseau de communication ;
une circuiterie de traitement (620) configurée pour réaliser toutes les étapes d'un procédé selon l'une quelconque des revendications 1 à 6.

8. Support de stockage non transitoire lisible par ordinateur (630) contenant un programme informatique comprenant des instructions exécutables qui, lorsqu'elles sont exécutées par un circuit de traitement dans un nœud de réseau dans un réseau de communication sans fil, amènent le nœud de réseau à réaliser l'un quelconque des procédés selon les revendications 1 à 6.
